(19) Europäisches Patentamt

European Patent Office

Office européen des brevets

(11) EP 1 494 491 A1

(12) EUROPEAN PATENT APPLICATION

(43) Date of publication:
05.01.2005 Bulletin 2005/01

(51) Int Cl.7: H04Q 7/36

(21) Application number: 04015624.2

(22) Date of filing: 02.07.2004

(84) Designated Contracting States:
AT BE BG CH CY CZ DE DK EE ES FI FR GB GR
HU IE IT LI LU MC NL PL PT RO SE SI SK TR
Designated Extension States:
AL HR LT LV MK

(30) Priority: 04.07.2003 JP 2003192327

(71) Applicant: NTT DoCoMo, Inc.
Tokyo 100-6150 (JP)

(72) Inventors:
• Hamamoto, Kozue, Int. Prop. Dept.
NTT DoCoMo, Inc.
Chiyoda-ku Tokyo 100-6150 (JP)
• Yoshino, Hitoshi Int. Prop. Dept.
NTT DoCoMo, Inc.
Chiyoda-ku Tokyo 100-6150 (JP)
• Otsu, Toru, Int. Prop. Dept. NTT DoCoMo, Inc.
Chiyoda-ku Tokyo 100-6150 (JP)

(74) Representative: Bockhorni, Josef
Patent-& Rechtsanwälte,
Grosse, Bockhorni, Schumacher,
Forstenrieder Allee 59
81476 München (DE)

(54) **Control station, radio communication system and frequency assignment method**

(57) According to the present invention, a control station 5 determines a number of groups to which cells belong, based on interference between the cells. Preferably, the control station 5 determines the number of groups as a number smaller than the number of cells constituting a closed cluster. The control station 5. determines the groups to which the cells belong, so as to keep constant shortest distances between cells belonging to the same group. Then the control station 5 determines a frequency band to be assigned to a cell belonging to a determined group, in each of the group units, and assigns different frequency bands to the respective groups.

Fig.13

**Description**

BACKGROUND OF THE INVENTION

Field of the Invention

The present invention relates to a control station, a radio communication system, and a frequency assignment method.

Related Background Art

In the conventional radio communication systems such as PDC (Personal Digital Cellular telecommunication system), PHS (Personal Handy-phone System), and GSM (Global System for Mobile communications), communication is performed through radio links multiplexed by time division multiplex between a radio base station and a plurality of mobile stations. In such systems, each base station is assigned a unique frequency channel to avoid interference with adjacent base stations. The base station uses links of this frequency channel as a plurality of time-division-multiplexed links to communicate with a plurality of mobile stations.

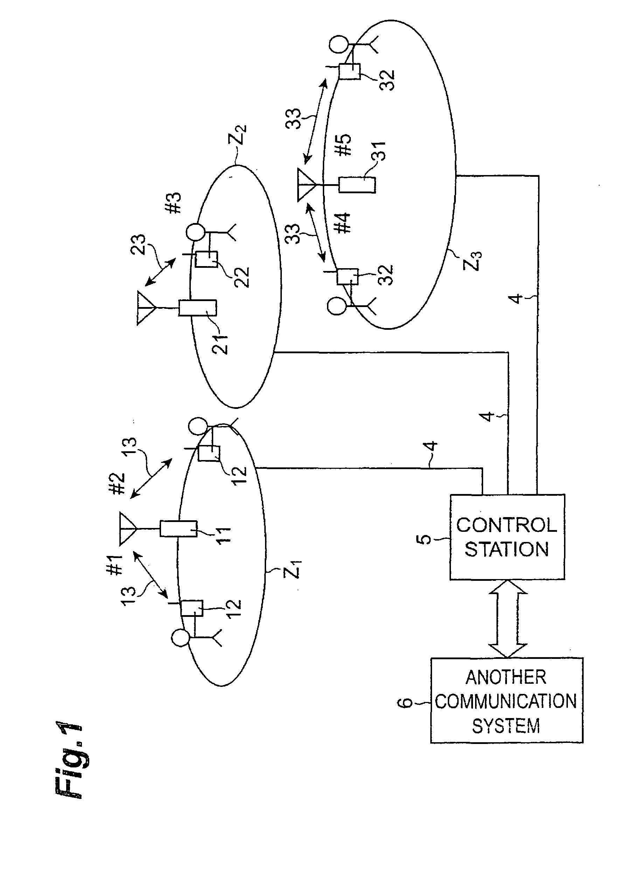

Fig. 1 is an illustration conceptually showing a conventional radio communication system having a multicell configuration. As shown in Fig. 1, radio communication between base station 11 and mobile stations 12, 12 is carried out through a unique frequency channel 13 assigned to the base station 11. Similarly, radio communication between base station 21 and mobile station 22 is carried out through a unique frequency channel 23 assigned to the base station 21, and radio communication between base station 31 and mobile stations 32, 32 through a unique frequency channel 33 assigned to the base station 31.

In the radio communication utilizing FDMA (Frequency Division Multiple Access) and TDMA (Time Division Multiple Access), as described above, frequency channels are assigned so as not to use an identical frequency band among adjacent cells, in order to avoid interference between cells. The conventional frequency channel assignment methods include the following methods, for example.

In the fixed frequency channel assignment (FCA: Fixed Channel Assignment) method, selectable frequency channels are preliminarily fixedly determined for the respective cells and the frequency channels can be reused at intervals of an optimal distance. Where an identical frequency band is repeatedly used at different places, it is necessary to determine the places at intervals of a fixed distance, in view of degradation of link quality due to mutual radio interference. The intervals of this distance differ depending upon the quality required by the system and, in many cases, an identical frequency band is not allowed to be assigned to adjacent cells but is assigned at intervals of a distance enough to ignore the mutual interference, thereby implementing reuse of the frequency band.

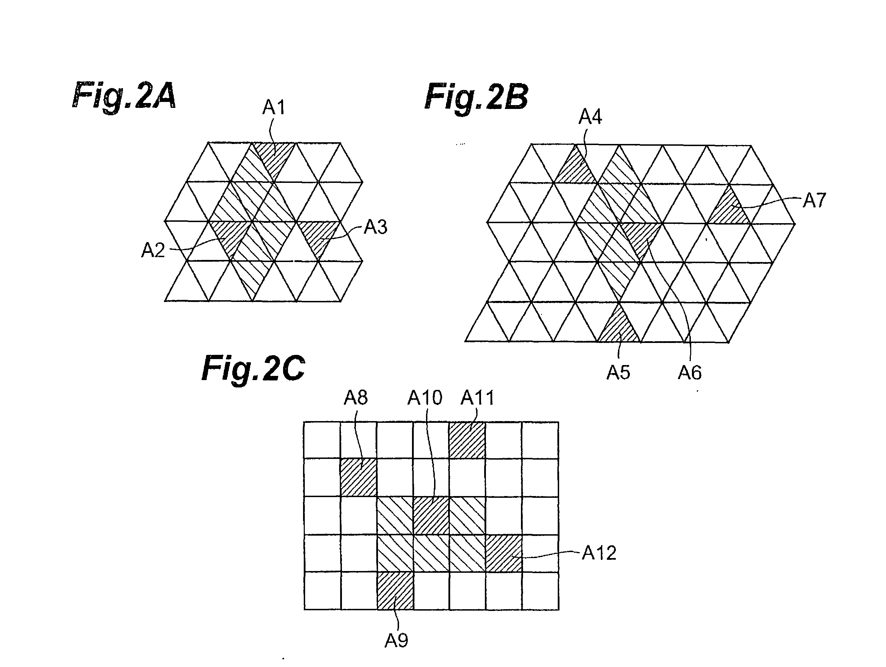

In this case, the cells using an identical frequency band are preferably arranged in such a reuse pattern that the intervals of base stations are equidistant, in consideration of influence of mutual interference. Some examples of such cell reuse patterns are presented in Fig. 2A to Fig. 2C. Fig. 2A is an illustration showing a cell reuse pattern where the cell shape is a regular triangle and the cell reuse factor K=6. The cell reuse factor K represents the number of cells per cell assigned an identical frequency band, and is equivalent to the number of types of assigned frequency channels. Similarly, Fig. 2B is an illustration showing a cell reuse pattern where the cell shape is a regular triangle and the cell reuse factor K=8. Fig. 2C is an illustration showing a cell reuse pattern where the cell shape is a square and the cell reuse factor K=6. In the figures A1 to A12 indicate cells to which an identical frequency band is assigned.

Cell shapes for arrangement of cells without clearance include three types of the regular triangle, square, and regular hexagon. When regular hexagon cells are two-dimensionally spread in arrangement without clearance, they can be arranged with less overlap than the regular triangle cells and square cells. For this reason, for covering the same area, it is feasible to relatively curb the rise in the number of installed base stations. They cause relatively few troubles, even without consideration to the radio interference in overlapping regions.

According to after-described Non-patent Document 1, in the case of the regular hexagon cells, the cell reuse factor K can be expressed by Eq (1) below, where R represents the cell radius of the regular hexagon cells and D the distance between cells using the same frequency band (distance between base stations).

$$K = (D/R)^2/3 \qquad (1)$$

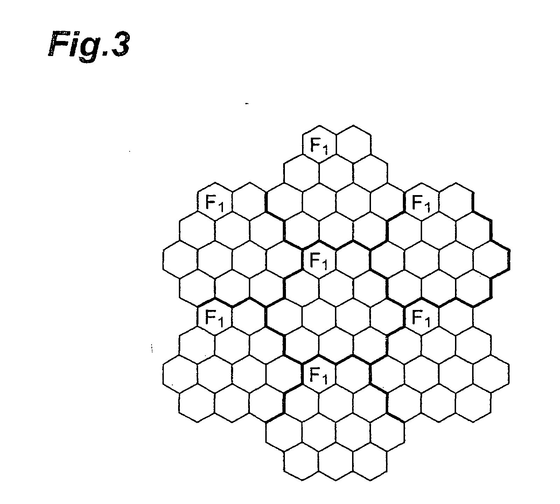

Fig. 3 is an illustration showing a cell reuse pattern where the cell shape is a regular hexagon and the cell reuse factor K=12. By applying above Eq (1) to this cell configuration, the distance D between cells $F_1$-$F_1$ using the same frequency band is given by D=6R. The larger the value of D, the easier the link quality can be assured, but the lower the spatial frequency utilization efficiency $\eta_s$.

According to after-described Non-patent Document 2, this $\eta_s$ can be expressed by Eq (2) below, where A represents the cell area.

$$\eta_s = 1/KA \ [/m^2] \qquad (2)$$

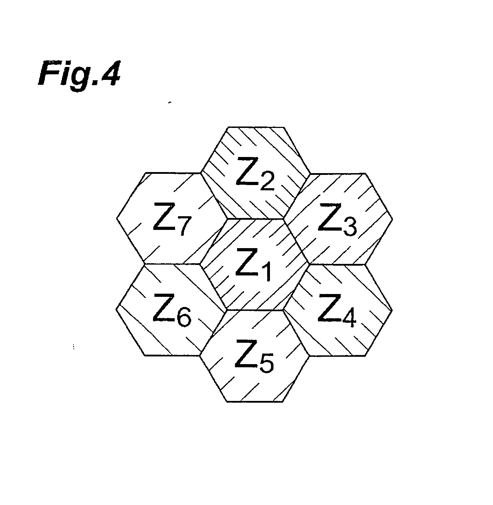

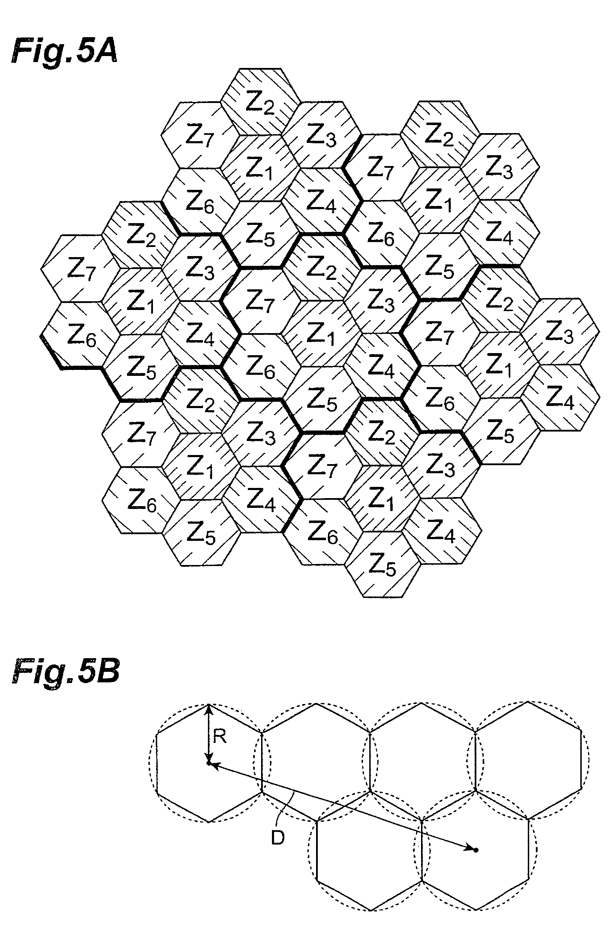

Fig. 4 shows a cell configuration where the cell shape is a regular hexagon and the cell reuse factor K=7. In this cell configuration, seven different frequency channels or channel groups are assigned to respective cells $Z_1$-$Z_7$, thereby avoiding interference with neighboring cells. By two-dimensionally spreading this cell configuration to an area configuration, a 7-cell reuse pattern as shown in Fig. 5A is obtained. In this case, seven kinds of frequency channels or channel groups are assigned to the respective cells $Z_1$-$Z_7$, whereby the same frequency bands are repeatedly used at intervals of the distance D enough to ignore the mutual interference. As a result, reuse of frequencies is realized. In this cell configuration, the relation of D=$\sqrt{21}$ R holds between D and R shown in Fig. 5B.

In contrast to the above-described fixed frequency channel assignment method, there is the dynamic frequency channel assignment method (DCA: Dynamic Channel Assignment). The dynamic frequency channel assignment method is a method of dynamically determining frequency channels to be assigned to the respective cells, according to traffics of the respective cells. In this method, all the frequency channels used in the radio communication system can be selected in all the cells as long as the required communication quality is satisfied.

According to after-described Non-patent Document 3, the dynamic frequency channel assignment method has the following advantages. The first advantage is the feasibility of effective utilization of frequencies according to traffic levels. The second advantage is no need for an assignment plan of frequency channels prior to a start of operation of the system and, in turn, easy design.

Control techniques for implementing the dynamic frequency channel assignment include a centralized control type and an autonomous distributed control type. In the centralized control type, a centralized control station manages channel use information of each cell and assigns channels. In contrast to it, in the autonomous distributed control type, the base stations of the respective cells autonomously assign channels.

In view of the entire service area, the efficient channel assignment to each cell largely varies depending upon variation of traffic. For implementing optimal channel assignment, huge computational efforts are needed because of the NP complete problem. By using a solving method with an approximate algorithm, application to the centralized control type is possible, but the application to the autonomous distributed control type is difficult because of the need for the huge computational efforts. Where excess traffic is centralized at a specific cell, the control is stabler in the centralized control type capable of finer control such as the restrictions on the use of channels in neighboring cells.

However, concerning multipliability of base stations, the centralized control type requires update of a reference table of cell-cell interference, whereas the autonomous distributed control type requires no such table and is thus superior. Concerning the loads on the control of channel assignment, the centralized control type increases the loads with expansion of the service area, whereas the autonomous distributed control type of distributing controls to the respective cells imparts the lower loads and is thus superior. However, on the occasion of a handover involving fast movement of a mobile station, the control is easier in the centralized control type in which information about the handover destination is known.

As described above, the centralized control type and the autonomous distributed control type have their respective advantages and disadvantages, and, in introduction to actual systems, the centralized control type dynamic frequency channel assignment is likely to be selected because it causes less call loss due to congestion, and less forced release in handovers and permits construction of stable systems.

Incidentally, a microcell system with a relatively small communication area of each base station is studied as a new-generation radio communication system. Since this system requires the autonomous distribution nature in order to enhance controllability, adoption of the autonomous distributed control type dynamic frequency channel assignment method is being studied. Here the autonomous distribution nature is a nature of an individual base station being capable of independently determining frequency channels and not affecting the other base stations.

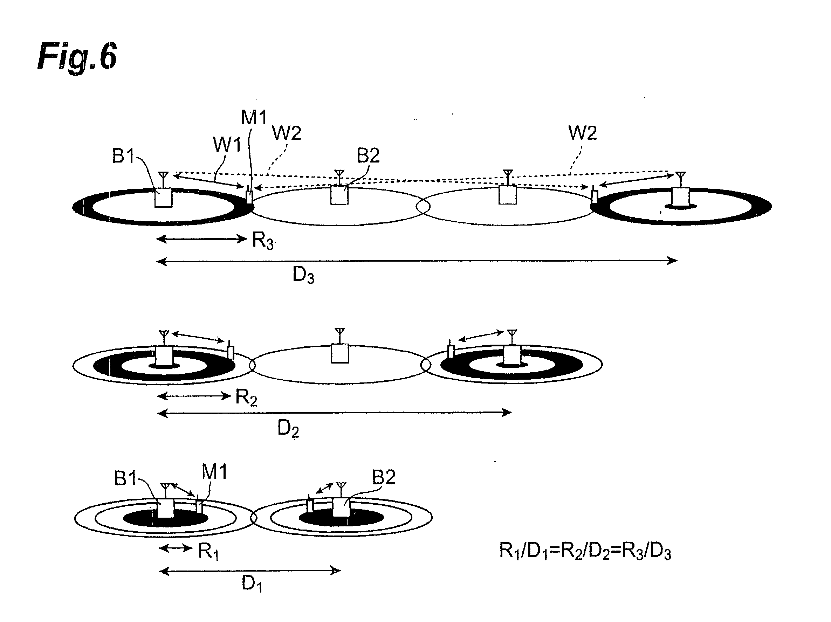

Reuse partitioning as a technique of the autonomous distributed control type DCA in the microcell system will be described below with reference to Fig. 6. In a case where the distance between cells of the same frequency band (frequency reuse distance) is fixed without use of the reuse partitioning, let us define the distance as $D_4$. In this case, the same frequency band is not allowed to be used unless the distance between base stations is at least the distance of $D_4$.

In general, the quality of radio communication is expressed by signal-to-noise ratio. At a place where the reception level is much greater than thermal noise, the noise is interference waves and the signal-to-noise ratio CIR (Carrier Interference Ratio) is signal/noise = received wave/interference waves = Carrier/Interference. The interference waves include an adjacent channel interference wave and a co-channel interference wave, and the adjacent channel interference wave can be well suppressed by performance of a filter or by insertion of guard bands. Therefore, only the co-channel interference wave is taken into consideration herein.

Since the received wave level is high in radio communication at places near a base station, no particular problem will arise even if the interference wave level is high within the range satisfying the foregoing CIR. Therefore, where a mobile station M1 is located at a position near a base station B1 in Fig. 6 (at the position of D=$R_1$), the frequency reuse distance of the channel used in calls of the mobile station M1 is short. In contrast to it, where the mobile station M1 is located at a position far from the base station B1 (at the position of $D=R_3$), because $R_1/D_1=R_3/D_3$ is constant, the frequency reuse distance becomes equal to that in the case without use of the reuse partitioning.

In the reuse partitioning, as described above, reuse partitions are constructed by concentric internal cells around a base station. In the reuse partitioning, the frequency reuse distance is varied according to the distance between the base station and the mobile station, i.e., according to the ratio of the received wave level to the interference wave level, thereby increasing the spatial frequency utilization efficiency.

Currently, shortage of the number of frequency channels is expected because of increase of traffic, and there is a need for a radio communication system with higher frequency utilization efficiency. There is a method of sharing a frequency band among hierarchical cells of macrocells and microcells, as one of frequency sharing techniques based on multiple traffic DCA. This method uses microcells as cells to increase the frequency utilization efficiency and assigns a microcell to a mobile station moving at high speed, thereby enabling flexible action.

After-described Patent Document 1 discloses a system described below, as a specific example of the above technology. Namely, this system is a system in which cells of different transmission rates (e.g., a microcell and a macrocell) share the same frequency band and in which when there is no available frequency channel in one cell, it is allowed to use free frequency channels of the other cell in order from one with the lowest priority level.

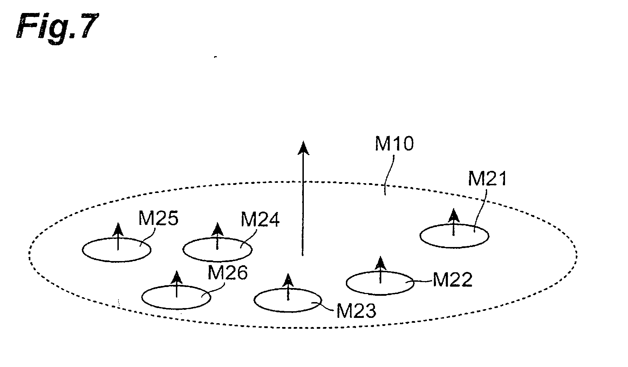

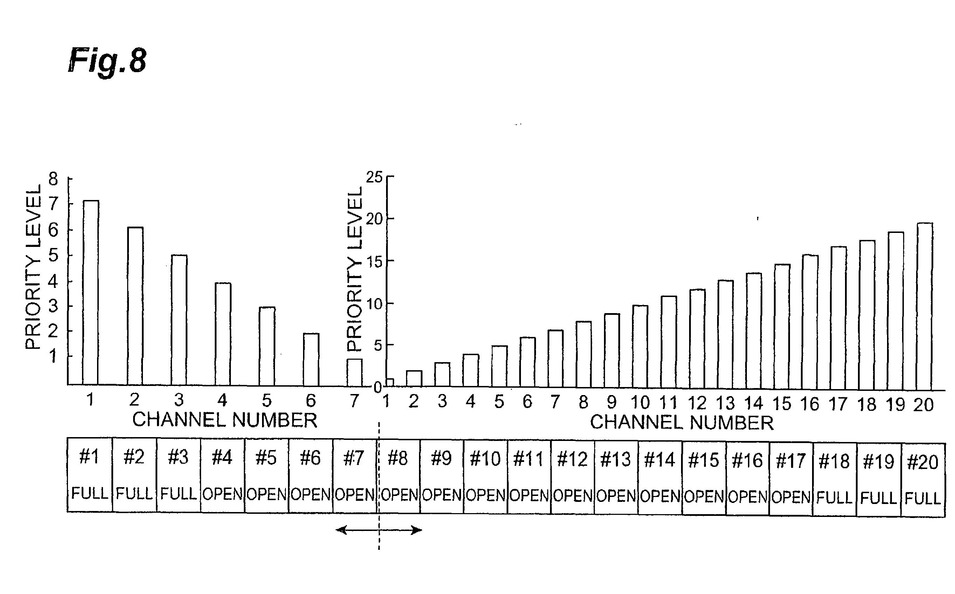

The invention according to the above conventional technology will be described below with reference to Figs. 7 and 8. Fig. 7 is an illustration conceptually showing a positional relation of macrocell M10 with microcells M21-M26 in a hierarchical cell structure. As shown in Fig. 7, the macrocell M10 being a communication area of a macrocell base station, and the microcells M21-M26 being communication areas of respective microcell base stations are hierarchically formed so as to overlap in part of the macrocell M10.

In these macrocell M10 and microcells M21-M26, frequency channels are assigned in the same frequency band. Each microcell M21-M26 is associated with the macrocell M10 with which the communication area of the microcell overlaps. A radio communication network of the hierarchical cell structure is comprised of a plurality of macro base stations and a plurality of micro base stations. The plurality of macro base stations each incorporate a control unit having a CPU and a memory, and store a table for search for a free frequency channel (cf. Fig. 8). The radio communication network autonomously executes a frequency channel assignment process and a partition control process according to methods described below.

The plurality of micro base stations each incorporate a control unit having a CPU and a memory and store a table for search for a free frequency channel (cf. Fig. 8), as the macro base stations do. Each micro base station performs communication with a macro base station with which a communication area thereof overlaps, and autonomously executes a frequency channel assignment process and a partition control process according to methods described below. Each micro base station communicates through a switch unit with another switch unit or a base station, or with a public communication network.

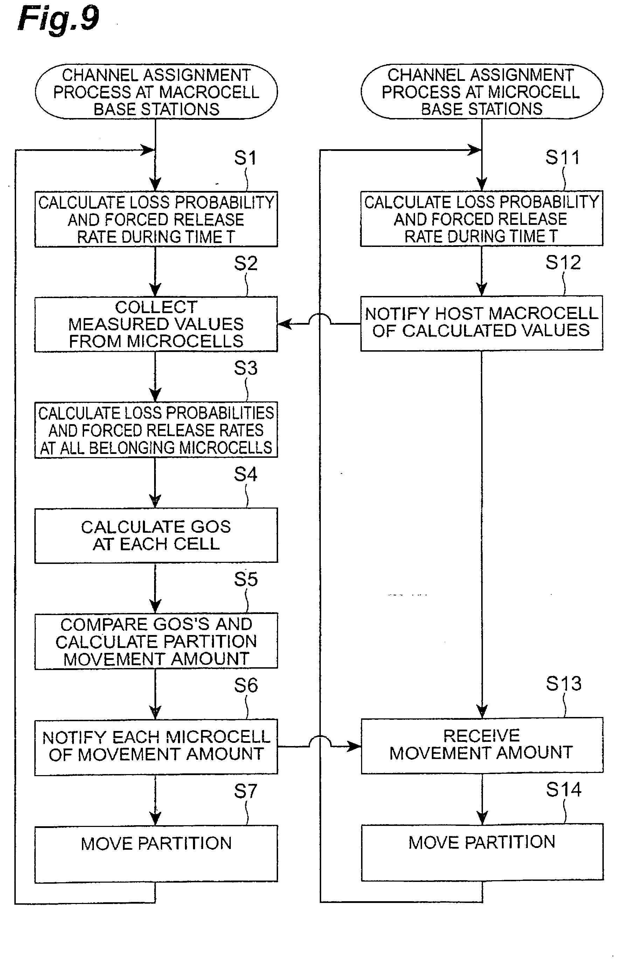

Fig. 9 is a flowchart for explaining an operation for the base stations to assign frequency channels to cells in the hierarchical structure.

S1 is to monitor information indicating a traffic state in the period of observation time T predetermined for each macrocell and calculate a loss probability and a forced release rate in each macrocell, based on the result of the monitoring operation. Here the information indicating the traffic state is information indicating a quality at each cell (QoS : Quality of Service), and such information is calculated using parameters of the number of calls occurring at the host macrocell, the number of call losses, the number of completed calls, the number of forced releases, and so on. On the other hand, information indicating a traffic state is also monitored at intervals of observation time T in each microcell and the results of calculation based on the monitoring results (loss probabilities and forced release rates at S11) are sent to each macrocell base station (S12). As a result, a macrocell base station collects calculated values at microcells in its overlapping communication area (S3).

Since the description of processes following the above is little relevant to the present invention, it is omitted herein, and in the conventional technology packing of frequency channels with high priority levels is carried out according to this procedure. Since such packing of frequency channels facilitates securing of free frequency bands and dynamic assignment, it is thus suitable for assignment of frequency bands in a system in which many channels of different sizes are mixed.

In the conventional radio communication systems including the digital cellular systems and others, as described above, a plurality of frequency channels are secured and the frequency channels are assigned at certain intervals, in order to avoid the interference between identical frequency channels.

In a case where a plurality of frequency channels are assigned to each cell, in order to avoid the adjacent channel interference in the cell, the frequency channels are periodically assigned at constant intervals. For example, in the case of the example of the 7-cell reuse pattern shown in Fig. 5A, frequency channels with channel numbers of $f_1, f_8, f_{15}, f_{22}, f_{29}, ...$ are assigned to the cell $Z_1$, and frequency channels with channel numbers of $f_2, f_9, f_{16}, f_{23}, f_{30}, ...$ to the cell $Z_2$. In this manner, the periodic assignment is often applied.

[Non-patent Document 1] WAVE SUMMIT COURSE "Mobile Telecommunications," Chapter 6, Sasaoka Hideichi

[Non-patent Document- 2] Digital wireless transmission technology, P371, Sanpei Seiichi

[Non-patent Document 3] WAVE SUMMIT COURSE "Radio Communications," P150-P158, Ohmsha, Sasaoka Hideichi

[Patent Document 4] Japanese Patent Application Laid-Open No. 11-205848

## SUMMARY OF THE INVENTION

However, for introducing CDMA (Code Division Multiple Access) and OFDM (Orthogonal Frequency Division Multiplexing) so as to meet the tendencies toward larger capacity and broader bands in the next-generation radio communication systems, it is necessary to implement continuous assignment of frequency bands in a broad band. Shortage of the number of frequency channels is also expected because of future traffic increase and there is a need for development of a radio communication system with higher frequency utilization efficiency. Particularly, demands for the fast radio communications utilizing the broad band are expected to occur as localized. In the radio communication systems, in order to flexibly adapt to such nonuniform traffic demands, it is necessary to perform more sophisticated control of frequency resources.

For example, since introduction of DCA of the conventional technology realizes effective utilization of frequency channels while keeping down segmentation loss, it is feasible to efficiently transmit data of different transmission rates such as sound, e-mail, still images, and moving pictures. However, the autonomous distributed control type DCA, particularly, the reuse partitioning or the like still has the problem in terms of control, such as increase of switchovers of frequency channels and forced releases where a mobile station moves at high speed.

It is also anticipated that the packet transmission with users sharing a transmission path becomes mainstream in future multimedia telecommunications. For this reason, it will be difficult to apply a learning type autonomous distributed dynamic method such as the channel segregation method adapted to learn preferentially used channels.

An object of the present invention is therefore to increase the utilization efficiency of frequency bands by enhancing flexibility of assignment control of frequency channels to respective cells.

In order to solve the above problems, a control station according to the present invention comprises number-of-groups determining means for determining a number of groups to which cells belong, based on interference between the cells; group determining means for determining groups to which the cells belong, so as to keep constant shortest distances between cells belonging to an identical group; and frequency determining means for determining a frequency band assigned to a cell belonging to a group determined by the group determining means, for each of the groups.

A radio communication system according to the present invention comprises the control station as set forth, and a plurality of base stations each having a cell as a communication area, wherein the control station further comprises band controlling means for performing a control to assign the plurality of base stations frequency bands for the respective groups determined by the frequency determining means, and wherein the plurality of base stations communicate with mobile stations, using the frequency bands assigned by the band controlling means.

A frequency assignment method according to the present invention comprises a number-of-groups determining step wherein a control station determines a number of groups to which cells belong, based on interference between the cells; a group determining step wherein the control station determines groups to which the cells belong, so as to keep constant shortest distances between cells belonging to an identical group; and a frequency determining step wherein a frequency band assigned to a cell belonging to a group determined in the group determining step is determined for each of the groups.

According to these aspects of the invention, when the interference is heavy between cells, the control station increases the number of groups consisting of a plurality of cells to increase the distance between cells to which the same frequency band is assigned (cells possibly causing mutual interference). Conversely, when the interference is low between cells, the control station decreases the number of groups to decrease the distance between cells to which the same frequency band is assigned (as a result, the same frequency band can be assigned to adjacent cells). This makes it feasible to assign each group frequencies in a band as broad as possible while reducing the cell-cell interference. Namely, it enhances the flexibility of assignment control of frequency channels to the respective cells, thus increasing the utilization efficiency of frequency bands.

Since the continuous frequency band assignment in a broad band is needed for introducing CDMA or OFDM to meet the tendencies toward larger capacity and broader bands in the next-generation radio communication systems, the application of the technology according to the present invention is particularly effective. By combining the technology according to the present invention with the conventional centralized control type DSM algorithm, it is feasible to readily implement the dynamic frequency assignment control in line with traffic variation. This enables the control station to finely and flexibly adapt to a complicated cell configuration. In the conventional frequency assignment control, where the traffic distribution was geographically nonuniform, there occurred many surplus frequency bands in groups with low traffics. For this reason, the effect of increase of frequency utilization efficiency by the present invention is particularly significant in such cases.

In the control station according to the present invention, preferably, the number-of-groups determining means determines the number of groups so as to be smaller than a number of all cells constituting a closed cluster.

The closed cluster is a cell group consisting of cells in the number suitable for the centralized control type dynamic frequency band assignment. According to the present invention, for example, where the number of cells constituting the closed cluster is 19, the cell reuse pattern is also a 19-cell reuse pattern, and the number of groups is determined out of numbers of 1 to 19. This permits a plurality of cells with a constant shortest distance between cells to be included in one group. Therefore, a plurality of cells are allowed to share one frequency band to the extent that there occurs no interference between these cells.

In the control station according to the present invention, preferably, the number-of-groups determining means determines a number of grouping stages on the basis of an interference distance and determines the number of groups, based on the number of stages. Since the interference distance differs depending upon a traffic situation of each cell, the number of grouping stages can be different depending upon groups.

According to the present invention, the control station determines the number of grouping stages on the basis of the distance where the cell-cell interference occurs. Namely, where it is necessary to set large intervals of the distance between cells sharing the same frequency band, for example, at the time of congestion of traffic, the control station sets a large value as the number of grouping stages and, otherwise, it sets a small value as the number of stages. The number of groups increases or decreases with increase or decrease in the number of stages. For example, where the first-stage grouping found that the number of groups was 4, if the second-stage grouping and the third-stage grouping are further carried out, the number of groups will successively increase to 8 and 16. The distance intervals of the cells sharing the same frequency band increase in conjunction with the increase in the number of groups, so as to decrease the cell-cell interference. In this manner, the control station determines the number of stages on the basis of the interference distance to control the number of groups in an indirect manner, whereby it can dynamically perform the frequency assignment with little cell-cell interference.

The control station according to the present invention, more preferably, further comprises collecting means for collecting statuses of use of frequency bands in the respective cells constituting the closed cluster.

According to the present invention, the control station is able to capture the statuses of use of frequency bands in the respective cells, and is thus able to capture statuses of use of frequency bands in the respective groups, based on these information. Accordingly, the control station is able to readily and properly determine a combination of groups that should be made to use the same band, e.g., a combination of groups using many frequency bands with groups using few frequency bands. As a result, the efficiency of use of each band becomes higher and it becomes feasible to implement frequency assignment with little waste.

In the control station according to the present invention, more preferably, the group determining means performs such grouping of the cells as to equalize the shortest distances between cells belonging to an identical group (grouping) and thereafter performs such step-by-step regrouping as to increase each shortest distance, thereby determining groups to which the cells belong.

According to the present invention, on the occasion of determining groups, the control station gradually increases the shortest distance while maintaining coincidence of shortest distances between cells belonging to the same group, thereby effecting step-by-step segmentalization of cell groups. When the shortest distance between cells becomes not less than a reference distance, the control station then terminates the step-by-step grouping and assigns mutually different frequency bands to cell groups at that time. This can minimize the increase in the number of groups in conjunction with the grouping and it is feasible to make as many frequency bands assigned to the groups as possible.

The control station according to the present invention, more preferably, further comprises band controlling means for variably controlling a width of a frequency band that each group can use.

According to the present invention, the control station assigns frequencies in a broader band, for example, to a group consisting of cells with high traffics and assigns frequencies in a relatively narrow band to a group consisting of cells with low traffics. By variably controlling the assigned frequency bands according to the difference in band demands between groups in this manner, each group can use an almost sufficient frequency band. This realizes the frequency assignment control with higher flexibility and further increases the utilization efficiency of frequency bands.

In the control station according to the present invention, more preferably, the band controlling means has a variably-uncontrollable fixed partition and a variably-controllable dynamic partition as partitions each indicating a boundary between consecutive frequency bands and performs a variable control thereof to variably control a width of a frequency band that each group can use.

According to the present invention, the control station uses the fixed and variable partitions in combination, which makes it easier to adjust a frequency band to be assigned to each group, to an arbitrary width.

In the control station according to the present invention, where frequency bands are parted by a dynamic partition and a fixed partition, the band controlling means may perform a control to assign a group a frequency band on the fixed partition side prior to that on the dynamic partition side.

According to the present invention, a rate of a frequency band near a dynamic partition being in an unused state becomes higher, as compared with a fixed partition. Therefore, the control station is able to flexibly and readily respond to variation in band demands of groups by moving the dynamic partition.

In the control station according to the present invention, where frequency bands are parted by three dynamic partitions, the band controlling means may perform a control to assign a group a frequency band on the center dynamic partition side prior to the others.

According to the present invention, a rate of the frequency bands near the dynamic partitions on both sides being in an unused state becomes higher, as compared with the center dynamic partition. This increases the number of partitions near which a frequency band is in the unused state (which increases from 1 to 2), as compared with a case where priority is given to the frequency bands on the dynamic partition sides at the ends. Therefore, the control station is able to more flexibly respond to variation in band demands of groups, by moving the both dynamic partitions at the ends.

In the control station according to the present invention, it is also effective that the band controlling means performs such a control as to preferentially part a frequency band for a group with a greater demand for the frequency band by a dynamic partition (for example, by dynamic partitions on both sides) and part a frequency band for a group with a lower demand for the frequency band by a fixed partition (for example, by a dynamic partition on only one side).

A group with a great demand for the frequency band is expected to demonstrate a large increase or decrease of band demand. Therefore, by preferentially using a dynamic partition as a partition for a frequency band in the group with the great demand for the frequency band as in the present invention, it becomes easier to absorb the increase or decrease of band demand. For example, supposing a band is segmented by a fixed partition at the left end and by dynamic partitions at the center and at the right end, the band is divided into a first band movable only at the right partition, and a second band movable at the partitions on both sides. In this case, the second band is assigned to a group with a high band demand, while the first band to a group with a low band demand. By this, even if there. occurs an increase in the band demand, a new frequency band can be readily secured by moving the right-end dynamic partition further to the right. This results in further enhancing the flexibility of the frequency assignment control and thus increasing the utilization efficiency of frequency bands.

The present invention enhances the flexibility of frequency channel assignment control to each cell and increases the utilization efficiency of frequency band.

The present invention will become more fully understood from the detailed description given herein below and the accompanying drawings which are given by way of illustration only, and thus are not to be considered as limiting the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

BRIEF DESCRIPTION OF THE DRAWINGS

Fig. 1 is an illustration conceptually showing a conventional radio communication system having a multicell configuration.

Fig. 2A is an illustration showing a conventional cell reuse pattern where the cell shape is a regular triangle and the cell reuse factor K=6. Fig. 2B is an illustration showing a conventional cell reuse pattern where the cell shape is a regular triangle and the cell reuse factor K=8. Fig. 2C is an illustration showing a conventional cell reuse pattern where the cell shape is a square and the cell reuse factor K=6.

Fig. 3 is an illustration showing a conventional cell reuse pattern where the cell shape is a regular hexagon and the cell reuse factor K=12.

Fig. 4 is an illustration showing a cell configuration where the cell shape is a regular hexagon and the cell reuse factor K=7.

Fig. 5A is an illustration showing a conventional cell reuse pattern where the cell shape is a regular hexagon and the cell reuse factor K=7. Fig. 5B is an illustration for explaining the distance between cells using the same frequency band.

Fig. 6 is an illustration for explaining reuse partitioning being one technique of autonomous distributed control type DCA.

Fig. 7 is an illustration conceptually showing a cell configuration having a hierarchical structure.

Fig. 8 is an illustration showing a data storage example in a table for search for a free frequency channel, and assignment priority ranks for the respective channel numbers.

Fig. 9 is a flowchart for explaining an operation of assigning frequency channels to cells having a hierarchical structure.

Fig. 10 is an illustration showing a functional configuration of a radio communication system and a control station in the first to fifth embodiments.

Fig. 11 is an illustration showing an example of grouping of a 19-cell reuse pattern of regular hexagon cells in the first embodiment.

Fig. 12 is an illustration showing a process of multistage grouping of the 19-cell reuse pattern of regular hexagon cells in the first embodiment.

Fig. 13 is an illustration showing an example of a combination of nineteen cells classified in eight groups with frequency bands assigned to the respective cells in the second embodiment.

Fig. 14 is an illustration showing the correspondence between frequencies and cells using the frequencies in the second embodiment.

Fig. 15 is an illustration showing an example of a combination of nineteen cells classified in eight groups with frequency bands assigned to the respective cells in the fourth embodiment.

Fig. 16 is an illustration conceptually showing a relation between parting positions of nine partitions and eight bandwidths in the third and fourth embodiments.

Fig. 17 is an illustration showing an example of grouping of a 37-cell reuse pattern of regular hexagon cells in the fifth embodiment.

Fig. 18 is an illustration showing a process of multistage grouping of a 37-cell reuse pattern of regular hexagon cells in the fifth embodiment.

## DESCRIPTION OF THE PREFERRED EMBODIMENTS

### First Embodiment

First, the first embodiment of the present invention will be described below in detail with reference to the drawings.

The description is based on the assumption that processing necessary for the frequency assignment according to the present invention is carried out by control station 5 being a component of a radio communication system. The processing necessary for the frequency assignment involves a process of actually assigning frequency bands, of course, and also involves processes as premises for it, for example, such processes as determination of the number of groups, correspondence between cells and groups, determination of frequency bands to be assigned to the respective groups, and so on.

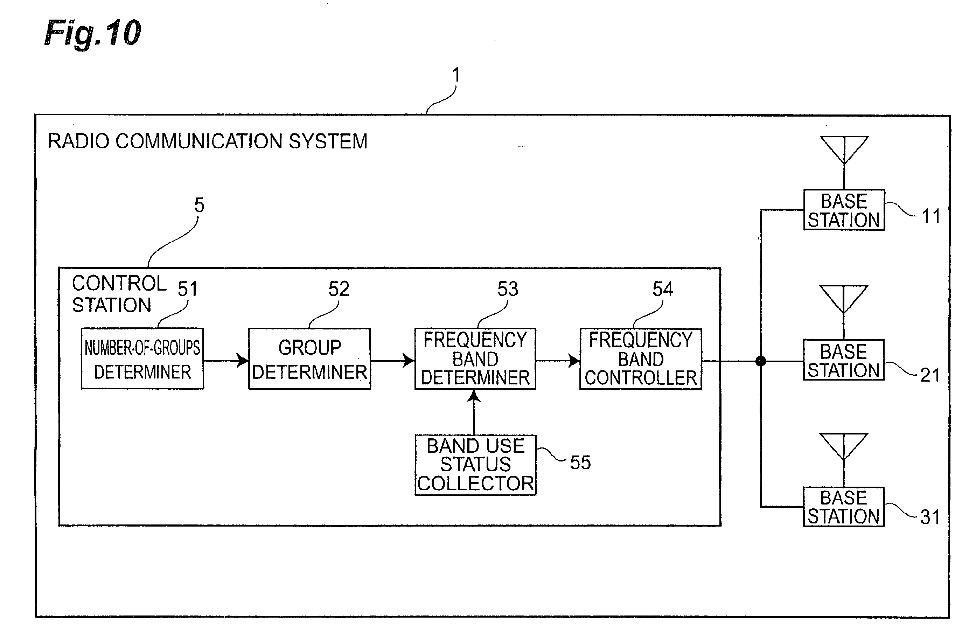

Fig. 10 shows a functional configuration of control station 5 according to the present invention. The control station 5 has a number-of-groups determiner 51, a group determiner 52, a frequency band determiner 53, a frequency band controller 54, and a band use status collector 55. These parts are connected so as to be able to feed and receive signals to and from each other through a bus.

The number-of-groups determiner 51 determines the number of groups to which the cells belong, based on interference between cells. Namely, in a case where there exist many cells with high traffics among the cells under control of the control station 5, it is expected that the level of cell-cell interference is high, or that the interference distance is long. Therefore, the number-of-groups determiner 51 determines the number of groups greater than a reference value. In contrast to it, in a case where there exists no cell with high traffic among the cells under control of the control station 5, it is expected that the level of cell-cell interference is low, or that the interference distance is short. Therefore, the number-of-groups determiner 51 determines the number of groups smaller than the reference value. The number-of-groups determiner 51 preferably determines the number of groups so as to be smaller than the number of all cells constituting a closed cluster.

The group determiner 52 determines groups to which the cells belong, so as to keep constant the shortest distances between cells belonging to the same group. The detailed processing will be described later, but the group determiner 52 performs step-by-step grouping for the cells in the determination of groups until the shortest distances become not less than a distance where no cell-cell interference occurs. The number of groups conforms to the number of groups determined by the number-of-groups determiner 51.

The frequency band determiner 53 determines a frequency band to be assigned to a cell in a group determined by the group determiner 52, for each of the groups. The detailed processing will be described later, but the frequency band determiner 53 determines the same band for a combination of a group using many frequency bands with a group using few frequency bands, based on information fed from the band use status collector 55, in order to increase the frequency utilization efficiency.

The frequency band controller 54 assigns different frequency bands for the respective groups, which were determined by the frequency band determiner 53, to a plurality of base stations 11, 21, and 31. After completion of the assignment of frequency bands, the frequency band controller 54 variably controls the widths of the frequency bands that can be used by the respective groups. A specific control method will be described later, but the frequency band controller 54 uses fixed and dynamic partitions according to necessity. On this occasion, the frequency band controller 54 performs such arrangement of frequency bands for the respective groups as to widen the widths of newly assignable (unused) frequency bands and as to increase degrees of freedom thereof.

The band use status collector 55 collects statuses of use of frequency bands in the respective cells constituting the closed cluster, and outputs the information to the frequency band determiner 53.

Referring again to Fig. 5A, supposing the cell reuse pattern is the 7-cell reuse pattern in the cell shape of the regular hexagon, cells expected to induce relatively large interference with the cell $Z_1$ are six cells of cells $Z_2, Z_3, Z_4, Z_5, Z_6$, and $Z_7$ being adjacent cells thereto. By assigning frequency bands different from that used in the cell $Z_1$, to the cells $Z_2, Z_3, Z_4, Z_5, Z_6$, and $Z_7$, therefore, significant interference can be avoided in all the cells of cells $Z_1$ to $Z_7$.

Many radio communication systems are constructed by circularly developing the assignment of different frequency bands to these cells $Z_1$ to $Z_7$. At this time, the shortest distances between cells using the same frequency band are D= $\sqrt{21}$ R as discussed in the prior art.

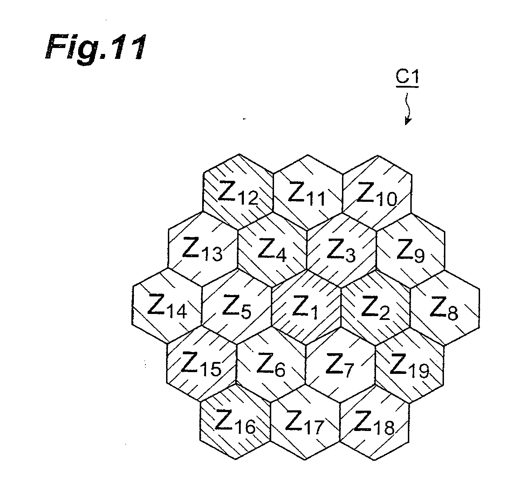

Let us suppose herein a 19-cell reuse pattern of regular hexagon cells as shown in Fig. 11. In Fig. 11, cells with hatching lines of the same kind indicate those using the same frequency band. In this frequency assignment method, the shortest distances D between cells using the same frequency band satisfy the condition of D≥ $\sqrt{21}$ R in the closed cluster C1 consisting of nineteen cells. In this frequency assignment method, the repetitive use of frequency bands per unit area is smaller than in the 7-cell reuse pattern shown in Fig. 5A, but it becomes easier to implement the dynamic frequency assignment control by adopting the procedure of plural stages described later in the grouping of cells using the same frequency band.

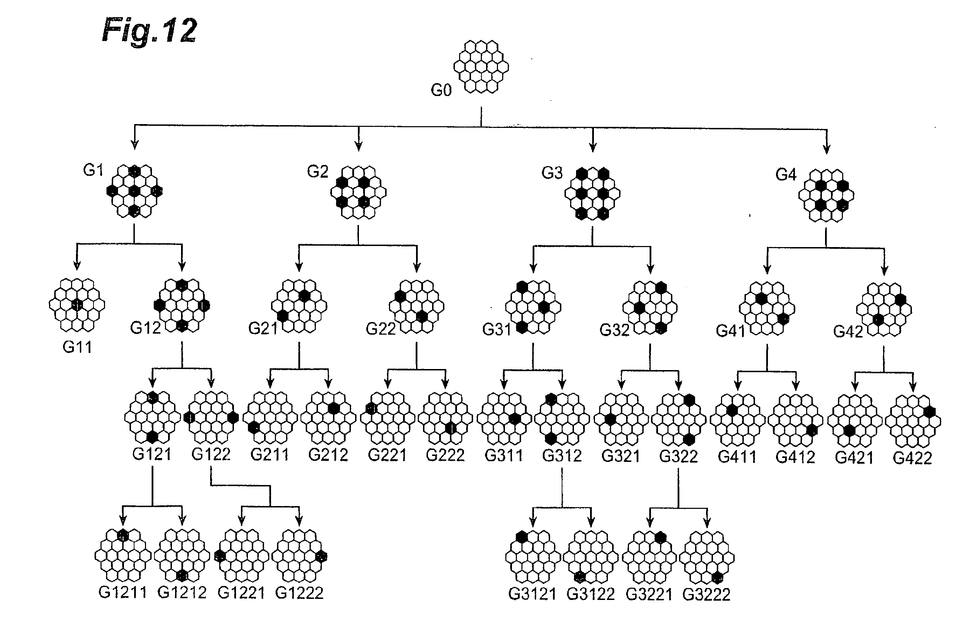

The control station 5 determines the number of grouping stages (the number of groups) for all the nineteen cells, based on the distance where the cell-cell interference occurs (interference distance). In order to implement the foregoing frequency assignment, the control station 5 performs grouping of the nineteen cells belonging to the closed cluster C1, and the method will be described with reference to Fig. 12. First, the cells $Z_1$-$Z_{19}$ (Group G0) are segmented into the following four groups so as to satisfy D≥3R. This is the first-stage grouping.

Group G1: cells $Z_1, Z_8, Z_{11}, Z_{14}, Z_{17}$
Group G2: cells $Z_3, Z_7, Z_{13}, Z_{15}$
Group G3: cells $Z_2, Z_5, Z_{10}, Z_{12}, Z_{16}, Z_{18}$
Group G4: cells $Z_4, Z_6, Z_9, Z_{19}$

Thereafter, the cells are further segmented into the following eight groups so as to satisfy D≥$\sqrt{21}$ R. This is the second-stage grouping.

Group G11: cell $Z_1$
Group G12: cells $Z_8, Z_{11}, Z_{14}, Z_{17}$
Group G21: cells $Z_3, Z_{15}$
Group G22: cells $Z_7, Z_{13}$
Group G31: cells $Z_2, Z_{12}, Z_{16}$
Group G32: cells $Z_5, Z_{10}, Z_{18}$
Group G41: cells $Z_4, Z_{19}$
Group G42: cells $Z_6, Z_9$

In this case, the numbers of cells in the respective groups are not equal, but the frequency assignment pattern shown in Fig. 11 is feasible. When it is necessary to further increase the intervals between cells sharing an identical frequency band, for example, at the time of congestion of traffic, much finer grouping can be performed. For example, the third-stage grouping results in segmenting the nineteen cells into a total of fifteen groups, and the correspondence between groups and cells is as follows.

G11: cell $Z_1$
G121: cells $Z_{11}, Z_{17}$
G122: cells $Z_8, Z_{14}$
G211: cell $Z_{15}$
G212: cell $Z_3$
G221: cell $Z_{13}$
G222: cell $Z_7$
G311: cell $Z_2$
G312: cells $Z_{12}, Z_{16}$
G321: cell $Z_5$
G322: cells $Z_{10}, Z_{18}$
G411: cell $Z_4$
G412: cell $Z_{19}$
G421: cell $Z_6$
G422: cell $Z_9$

Furthermore, the fourth-stage grouping results in segmenting the nineteen cells into a total of nineteen groups, and the correspondence between groups and cells is as follows.

G11: cell $Z_1$
G1211: cell $Z_{11}$
G1212: cell $Z_{17}$
G1221: cell $Z_{14}$
G1222: cell $Z_8$
G211: cell $Z_{15}$
G212: cell $Z_3$
G221: cell $Z_{13}$
G222: cell $Z_7$
G311: cell $Z_2$
G3121: cell $Z_{12}$
G3122: cell $Z_{16}$
G321: cell $Z_5$
G3221: cell $Z_{10}$
G3222: cell $Z_{18}$
G411: cell $Z_4$
G412: cell $Z_{19}$
G421: cell $Z_6$
G422: cell $Z_9$

In this manner, the number of groups geometrically increases with increase in the number of grouping stages. Namely, the number of groups without grouping (in the case of the number of stages being 0) is 1, whereas the number of groups is 4 in the case of the number of stages being 1. Furthermore, the number of groups is 8 in the case of the number of stages being 2, and the number of groups is 15 in the case of the number of stages being 3. Then the number of groups first becomes 19 which is equal to the number of cells in the groups in the case of the number of stages being 4. In this manner, the control station 5 determines the number of grouping stages according to the cell-cell interference distance, whereby it can indirectly determine the number of groups.

The control station 5 minimizes the mutual interference between base stations by properly assigning an identical frequency band to cells in each cell group resulting from the grouping through a plurality of stages as described above. This makes it feasible to achieve improvement in communication quality with constant certainty.

Second Embodiment

Subsequently, the second embodiment of the present invention will be described in a form wherein the bandwidths of frequency bands assigned to the cell groups resulting from the grouping are made variable and dynamic frequency assignment is implemented. In the present embodiment, partitions indicating boundaries between frequency bands to be assigned will be explained using an example of five fixed partitions and four dynamic partitions. Since the major configuration of the control station, the cell configuration, and the grouping method are similar to those in the first embodiment, the description thereof is omitted herein, and a method of dynamically performing the frequency assignment will be described below.

Namely, the prior art adopted the method in which at the time of design of a system the partitioning ratio of frequency bands for the respective cells was preliminarily determined based on estimated traffics at the respective cells and in which walls (partitions) of the frequency bands were fixed. In contrast to it, the radio communication system in the present embodiment provides the partitions with freedom of movement, thereby enabling the band assignment following the traffic variation.

In the conventional DCA in hierarchical cells, it was difficult to secure free channels by channel rearrangement between a macrocell and a microcell sharing the same frequency band. In contrast to it, the radio communication system in the present embodiment is constructed with the idea of assigning different frequency bands to the respective cell groups corresponding to the eight groups G11, G12, G21, G22, G31, G32, G41, and G42. For this reason, there are seven partitions. Among these, almost half, i.e., four partitions are arranged movable (dynamic partitions), whereby the dynamic frequency assignment control can be relatively easily implemented.

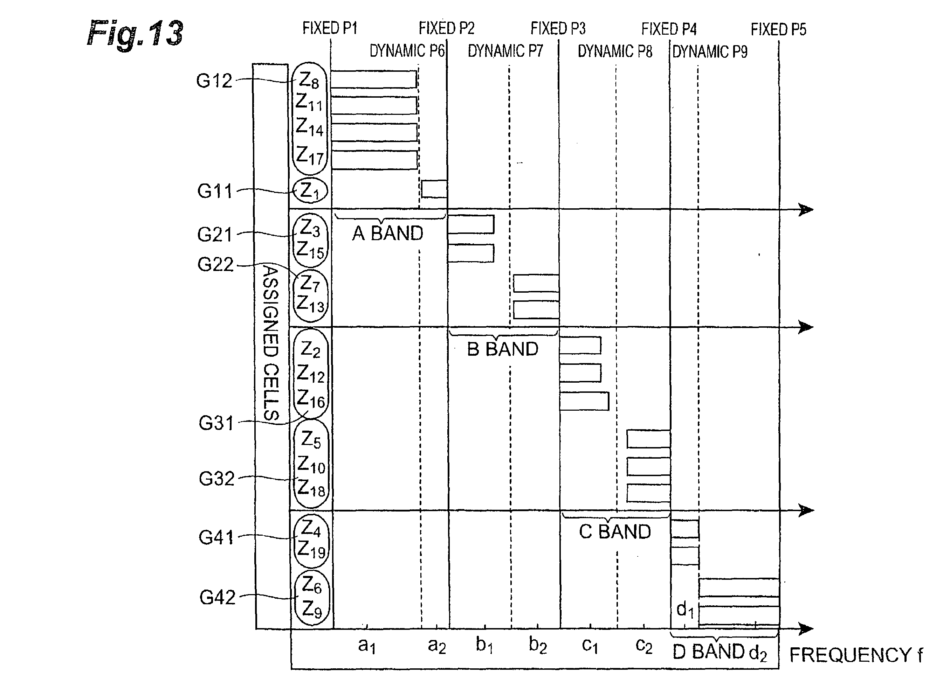

Fig. 13 is an illustration showing an example of a combination of the nineteen cells classified in the eight groups with the frequency bands assigned to the respective cells. With reference to Fig. 13, there are eight frequency bands parted by five fixed partitions P1-P5 and four dynamic partitions P6-P9. First, the five fixed partitions P1-P5 divide the entire frequency band into four bands A, B, C, and D. Furthermore, each of these four bands is divided into two bands by the four dynamic partitions P6-P9. A frequency band partitioning ratio in each band is dependent upon traffic volumes in respective groups.

In the radio communication system of the present embodiment, as shown in Fig. 13, groups G11 and G12 share A-band, groups G21 and G22 B-band, groups G31 and G32 C-band, and groups G41 and G42 D-band. For example, in a case where the cell $Z_1$ is in a low traffic state and where at a few cells belonging to G12, the traffic demand is not met even if the assigned frequency band is fully used, the control station 5 moves the dynamic partition P6 to the higher frequency side (to the right in the figure). This expands the frequency band that the cells $Z_8$, $Z_{11}$, $Z_{14}$, $Z_{17}$ belonging to G12 can use.

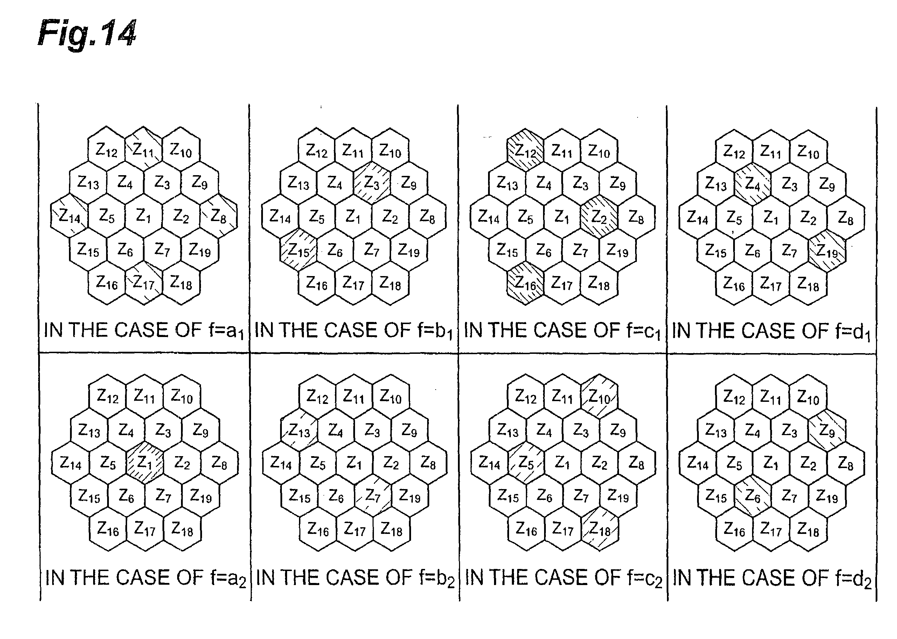

Fig. 14 shows the correspondence between frequencies ($f=a_1$, $a_2$, $b_1$, $b_2$, ..., $d_1$, $d_2$) and cells using the frequencies in the case where the assignment of frequency bands as described above is implemented. For example, where the frequency $f=a_1$, the cells using the frequency band to which $a_1$ belongs are cells $Z_8$, $Z_{11}$, $Z_{14}$, and $Z_{17}$. Similarly, the cells using the frequency band to which the frequency $b_1$ belongs are cells $Z_3$ and $Z_{15}$.

In this manner, the control station 5 properly assigns the frequency bands parted by the fixed partitions and dynamic partitions, to the cell groups resulting from the grouping through the plurality of stages. This keeps the cell-cell distances D not less than $\sqrt{21}$ R and minimizes the mutual interference between base stations. Since the control station 5 controls the four dynamic partitions, it reduces division loss due to band segmentation about the frequency bands assigned to the respective groups. As a result, it becomes feasible to implement efficient frequency assignment.

Third Embodiment

The radio communication system in the second embodiment can also adopt a modified form as described below. Namely, the second embodiment was such that each of the four bands A, B, C, and D was parted by fixed partitions and each two groups used their respective bands parted by a dynamic partition. For this reason, in a case where two groups with heavy traffic share one band, it is difficult to assign an enough frequency band to the both groups.

In the present embodiment, therefore, the control station 5 assigns the same band to a group with the highest traffic (i.e., the largest required frequency band) and to an opposite group, i.e., a group with the lowest traffic (smallest required frequency band). In a fashion similar thereto, the control station 5 assigns the same band to a group with the second highest traffic and to a group with the second lowest traffic. Furthermore, similarly for the groups with the third and fourth highest traffics, the same band is assigned. The control station 5 performs such assignment control in real time, whereby it can suppress the division loss caused by the use of the fixed partitions. As a result, it becomes feasible to perform the frequency assignment more efficiently.

Fourth Embodiment

The radio communication system in the third embodiment can also adopt a modified form as described below. Namely, the radio communication system in the present embodiment is an example of a system adopting three fixed partitions and six dynamic partitions, to which the group determining method described in the third embodiment is applied.

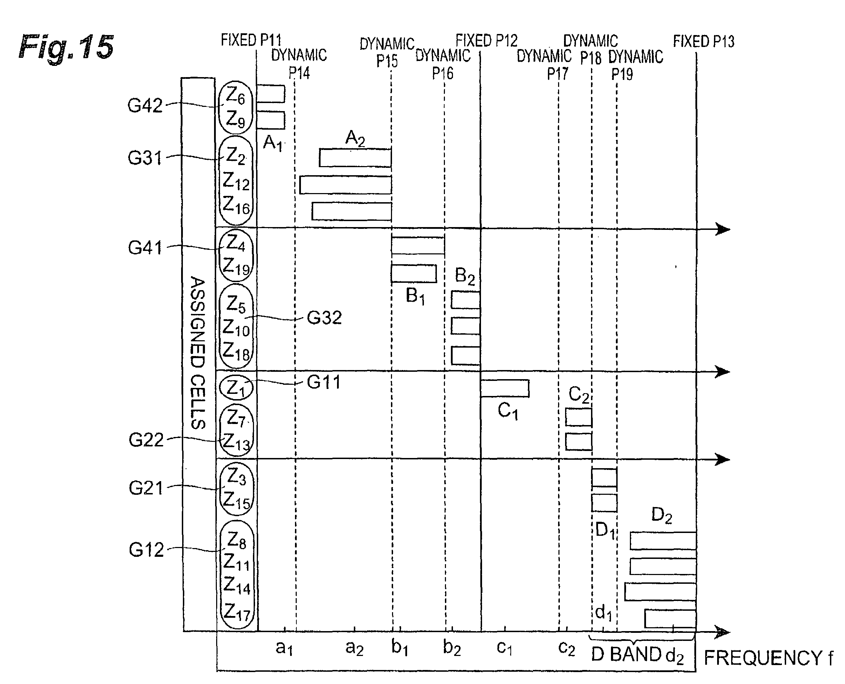

Fig. 15 is an illustration showing an example of a combination of nineteen cells classified in eight groups with the frequency bands assigned to the cells. With reference to Fig. 15, there are eight frequency bands parted by two fixed partitions P11, P13 at both ends, and by seven remaining fixed or dynamic partitions P12, P14-P19 between them. First, the entire frequency band is divided into band A, B and band C, D by one fixed partition P12, and then each of the band A, B and the band C, D is divided by one dynamic partition P15 or P18. As a result, four bands A, B, C, and D are formed. Furthermore, each of these bands is divided by one dynamic partition P14, P16, P17, or P19. As a result, eight frequency bands are formed.

Two frequency bands exist in each of the four bands A, B, C, and D thus formed. Here these frequency bands will be denoted by $A_1$, $A_2$, $B_1$, $B_2$, $C_1$, $C_2$, $D_1$, and $D_2$. A partitioning ratio of each band is dependent upon traffic volumes in groups to which frequency bands are assigned. The control station 5 controls the six dynamic partitions to make all the bandwidths variable. Accordingly, as compared with the form using the five fixed partitions as described in the second embodiment, the present embodiment increases degrees of freedom for the widths of frequency bands assigned to the respective groups and thus enables more flexible frequency assignment.

In this radio communication system, as in the third embodiment, a broader band can also be preferentially assigned to a group expected to have a high traffic (large required frequency band). Namely, the same band A is assigned to a combination of a group in a large band demand (e.g., G31) with a group in a small band demand (e.g., G42). Similarly, the same band D is assigned to a combination of a group in a large band demand (e.g., G12) with a group in a small band demand (e.g., G21).

Furthermore, concerning the band A, the control station 5 assigns a band $A_2$ to a group in a large band demand and a band $A_1$ to a group in a small band demand. The reason for it will be described below. Namely, let us suppose a case where, under a circumstance in which the entire frequency bands of bands $A_1$, $A_2$ both are used up, a band requirement in the group G31 in the large band demand is further increased. In this case, supposing the $A_2$-side frequency band is assigned to G31 being the group in the large band demand as in the present embodiment, if there is a free space in the B-band, the assignment control as described below can be implemented. Namely, the $B_1$-band is shifted to the higher frequency side (to the right in the figure) and thereafter the dynamic partition P15 is moved to the higher frequency side, thereby increasing the frequency band assigned to the $A_2$-band. This overcomes the band shortage in response to the increase of band requirement in the group G31.

However, if the $A_1$-side frequency band were assigned to G31 being the group in the large band demand, double bandwidth changing processes as described below would be necessary even if there were a free space in the B-band. Namely, the $B_1$-band is shifted to the higher frequency side (to the right in the figure) and thereafter the dynamic partition P15 is moved to the higher frequency side. Furthermore, the $A_2$-band is shifted to the higher frequency side and thereafter the dynamic partition P14 is moved to the higher frequency side. By assigning the $A_2$-band to the group G31 and the $A_1$-band to the group G42 in the A-band in this manner, the frequency assignment processing procedure can be simplified.

For the same reason, concerning the B-band, it is more efficient that the control station 5 assigns the $B_1$-band to the group G41 in the large band demand and the $B_2$-band to the group G32 in the small band demand. Concerning the C-band, in a fashion similar to the A-band, the control station assigns the $C_2$-band to the group G22 in the large band demand and the $C_1$-band to the group G11. Concerning the D-band, in a fashion similar to the B-band, the control station preferably assigns the $D_1$-band to the group G21 in the large band demand and the $D_2$-band to the group G12.

Depending upon the request from the radio communication system, as in the third and fourth embodiments, there are cases with a high possibility where the difference is large in traffic variation levels and a specific cell requires a greater frequency band. In such cases, the control station 5 needs to preferentially assign a band easy to secure a broader frequency band, to the specific cell, and the number of dynamic partitions is particularly significant.

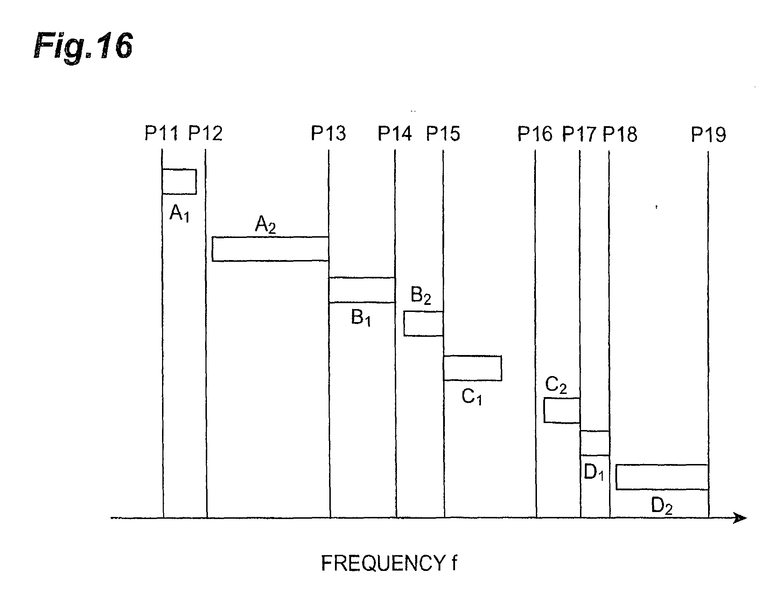

Fig. 16 shows the relationship between parting positions of nine partitions P11-P19 and eight bandwidths. For example, where at least P12, P14, P16, and P18 out of P11-P19 are dynamic partitions, all the bandwidths are variable. In consequence, the effect as described in the third embodiment is achieved. For example, where P12, P13, P14, P16, P17, and P18 out of P11-P19 are dynamic partitions, all the bandwidths are variable, of course, and it becomes feasible to effect adjustment of the frequency bands across the bands.

Namely, it becomes feasible to achieve mutual supplement of frequency bands between different bands, e.g., between bands A, B or between bands C, D. As a result, the effect as described in the fourth embodiment is obtained.

Furthermore, where P12-P18 out of P11-P19 are dynamic partitions, i.e., where only P11 and P19 at both ends are fixed partitions, freedom is extremely high for each bandwidth and each frequency band in the band. For example, the control station 5 can shift the dynamic partition P12 to the position of P11 and the dynamic partition P13 to the position of P19, whereby G31 using the band $A_2$ as a frequency band can dominate the entire frequency band between the fixed partitions P11 and P19.

Fifth Embodiment

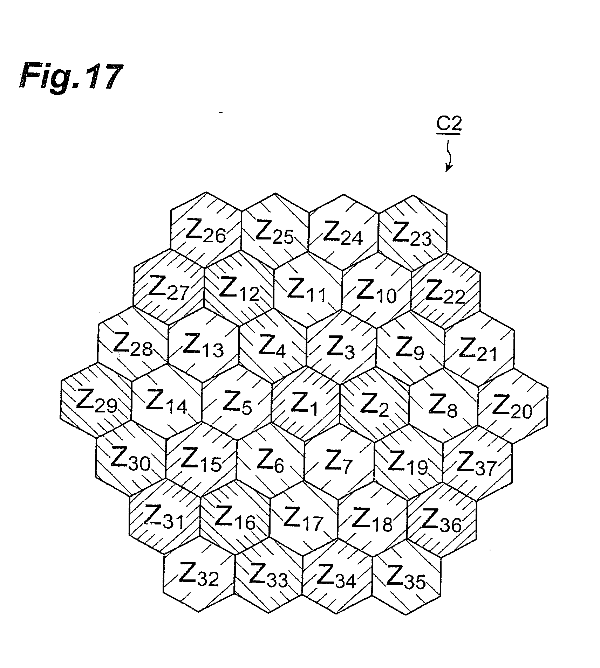

The radio communication system in the first embodiment can also adopt a modified form as described below. Namely, the first embodiment was based on the assumption that the cell reuse pattern was the 19-cell reuse pattern of regular hexagon cells, whereas the present embodiment is based on the assumption that the cell reuse pattern is a 37-cell reuse pattern of regular hexagon cells, as shown in Fig. 17. In Fig. 17 cells with hatching lines of the same kind indicate cells using an identical frequency band. In the present embodiment, as in the first embodiment, the control station 5 is also configured to determine the number of grouping stages for all the thirty seven cells belonging to a closed cluster C2, based on the distance where the cell-cell interference occurs (interference distance), thereby determining the number of groups, and to perform the dynamic frequency band assignment.

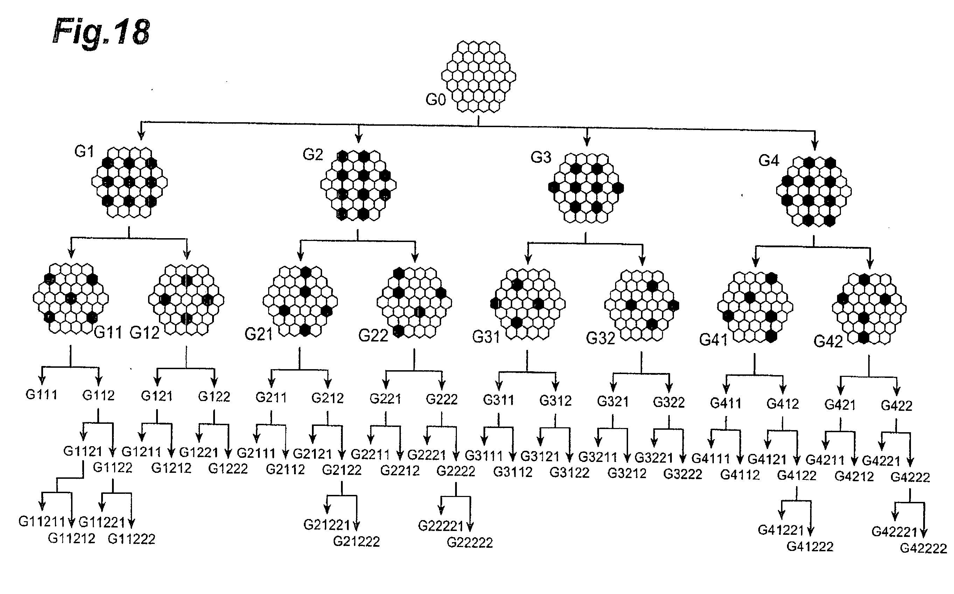

A grouping method is basically similar to that in the first embodiment, and the procedure thereof will be described below with reference to Fig. 18. First, the cells $Z_1$ to $Z_{37}$ (Group G0) is segmented into the following four groups so as to meet $D \geq 3R$. This is first-stage grouping.

> Group G1: cells $Z_1$, $Z_8$, $Z_{11}$, $Z_{14}$, $Z_{17}$, $Z_{22}$, $Z_{27}$, $Z_{31}$, $Z_{36}$
> Group G2: cells $Z_3$, $Z_7$, $Z_{13}$, $Z_{15}$, $Z_{21}$, $Z_{24}$, $Z_{26}$, $Z_{32}$, $Z_{34}$, $Z_{37}$
> Group G3: cells $Z_2$, $Z_5$, $Z_{10}$, $Z_{12}$, $Z_{16}$, $Z_{18}$, $Z_{20}$, $Z_{29}$
> Group G4: cells $Z_4$, $Z_6$, $Z_9$, $Z_{19}$, $Z_{23}$, $Z_{25}$, $Z_{28}$, $Z_{30}$, $Z_{33}$, $Z_{35}$

Furthermore, the cells are segmented into the following eight groups so as to satisfy $D \geq \sqrt{21}\ R$. This is second-stage grouping.

> Group G11: cells $Z_1$, $Z_{22}$, $Z_{27}$, $Z_{31}$, $Z_{36}$
> Group G12: cells $Z_8$, $Z_{11}$, $Z_{14}$, $Z_{17}$
> Group G21: cells $Z_3$, $Z_{15}$, $Z_{24}$, $Z_{34}$, $Z_{37}$
> Group G22: cells $Z_7$, $Z_{13}$, $Z_{21}$, $Z_{26}$, $Z_{32}$

> Group G31: cells $Z_2$, $Z_{12}$, $Z_{16}$, $Z_{29}$
> Group G32: cells $Z_5$, $Z_{10}$, $Z_{18}$, $Z_{20}$
> Group G41: cells $Z_4$, $Z_{19}$, $Z_{23}$, $Z_{30}$, $Z_{35}$
> Group G42: cells $Z_6$, $Z_9$, $Z_{25}$, $Z_{28}$, $Z_{33}$

At this time, the frequency assignment pattern shown in Fig. 17 becomes feasible. When the intervals of cells sharing the same frequency band need to be further larger, e.g., at the time of congestion of traffic, the grouping may be made finer. For example, third-stage grouping will result in segmenting the thirty seven cells into a total of sixteen groups, as shown in Fig. 18. Furthermore, fourth-stage grouping will result in segmenting the thirty seven cells into a total of thirty one groups. Then fifth-stage grouping will result in achieving one-to-one correspondence between cells and groups.

The control station 5 properly assigns the same frequency bands to cells in each cell group resulting from the grouping through the plurality of stages as described above, thereby minimizing the mutual interference between base stations. This makes it feasible to achieve improvement in communication quality with constant certainty.

The form described in each of the above embodiments is a preferred example of the control station, radio communication system, and frequency assignment method according to the present invention, and it is noted that the present invention is by no means intended to be limited to the above forms. For example, on the occasion of assignment of frequency bands, the control station 5 does not always have to assign different frequency bands to all the groups. Namely, a potential configuration is such that the control station 5 assigns no frequency band to a group without traffic or to a cell or a group of low traffic volume and if it results in making a sufficient distance between cells using the same frequency band, a surplus frequency band is assigned to another group different from the above group.

From the invention thus described, it will be obvious that the embodiments of the invention may be varied in many ways. Such variations are not to be regarded as a departure from the spirit and scope of the invention, and all such modifications as would be obvious to one skilled in the art are intended for inclusion within the scope of the following claims.

**Claims**

1. A control station comprising:

> number-of-groups determining means for determining a number of groups to which cells belong, based on interference between the cells; group determining means for determining groups to which the cells belong, so as to keep constant shortest distances between cells belonging to an identical group; and

frequency determining means for determining a frequency band assigned to a cell belonging to a group determined by the group determining means, for each of the groups.

2. The control station according to Claim 1, wherein the number-of-groups determining means determines the number of groups so as to be smaller than a number of all cells constituting a closed cluster.

3. The control station according to Claim 1, wherein the number-of-groups determining means determines a number of grouping stages on the basis of an interference distance and determines the number of groups, based on the number of stages.

4. The control station according to Claim 2, further comprising collecting means for collecting statuses of use of frequency bands in the respective cells constituting the closed cluster.

5. The control station according to Claim 2, wherein the group determining means performs such grouping of the cells as to equalize the shortest distances between cells belonging to an identical group, and thereafter performs such step-by-step regrouping as to increase each shortest distance, thereby determining groups to which the cells belong.

6. The control station according to Claim 1, further comprising band controlling means for variably controlling a width of a frequency band that each group can use.

7. The control station according to Claim 6, wherein the band controlling means has a variably-uncontrollable fixed partition and a variably-controllable dynamic partition as partitions each indicating a boundary between consecutive frequency bands and performs a variable control thereof to variably control a width of a frequency band that each group can use.

8. The control station according to Claim 7, wherein where frequency bands are parted by a dynamic partition and a fixed partition, the band controlling means performs a control to assign a group a frequency band on the fixed partition side prior to that on the dynamic partition side.

9. The control station according to Claim 7, wherein where frequency bands are parted by three dynamic partitions, the band controlling means performs a control to assign a group a frequency band on the center dynamic partition side prior to the others.

10. The control station according to Claim 7, wherein the band controlling means performs such a control as to preferentially part a frequency band for a group with a greater demand for the frequency band by a dynamic partition and part a frequency band for a group with a lower demand for the frequency band by a fixed partition.

11. A radio communication system comprising the control station as set forth in Claim 1, and a plurality of base stations each having a cell as a communication area,

wherein the control station further comprises band controlling means for performing a control to assign the plurality of base stations frequency bands for the respective groups determined by the frequency determining means, and

wherein the plurality of base stations communicate with mobile stations, using the frequency bands assigned by the band controlling means.

12. A frequency assignment method comprising:

a number-of-groups determining step wherein a control station determines a number of groups to which cells belong, based on interference between the,cells;

a group determining step wherein the control station determines groups to which the cells belong, so as to keep constant shortest distances between cells belonging to an identical group; and

a frequency determining step wherein a frequency band assigned to a cell belonging to a group determined in the group determining step is determined for each of the groups.

## Fig.1

Fig.2A

Fig.2B

Fig.2C

Fig.3

**Fig.4**

## Fig.5A

## Fig.5B

## Fig.6

$$R_1/D_1 = R_2/D_2 = R_3/D_3$$

EP 1 494 491 A1

Fig.7

## Fig.8

# *Fig.9*

```
┌─────────────────────┐              ┌─────────────────────┐
│ CHANNEL ASSIGNMENT  │              │ CHANNEL ASSIGNMENT  │
│ PROCESS AT MACROCELL │             │ PROCESS AT MICROCELL │
│ BASE STATIONS       │              │ BASE STATIONS       │
└─────────────────────┘              └─────────────────────┘
```

S1

CALCULATE LOSS PROBABILITY
AND FORCED RELEASE
RATE DURING TIME T

S2

COLLECT
MEASURED VALUES
FROM MICROCELLS

S3

CALCULATE LOSS PROBABILITIES
AND FORCED RELEASE RATES
AT ALL BELONGING MICROCELLS

S4

CALCULATE GOS
AT EACH CELL

S5

COMPARE GOS'S AND
CALCULATE PARTITION
MOVEMENT AMOUNT

S6

NOTIFY EACH MICROCELL
OF MOVEMENT AMOUNT

S7

MOVE PARTITION

S11

CALCULATE LOSS PROBABILITY
AND FORCED RELEASE
RATE DURING TIME T

S12

NOTIFY HOST MACROCELL
OF CALCULATED VALUES

S13

RECEIVE
MOVEMENT AMOUNT

S14

MOVE PARTITION

# Fig.10

RADIO COMMUNICATION SYSTEM — 1

CONTROL STATION — 5

- NUMBER-OF-GROUPS DETERMINER — 51
- GROUP DETERMINER — 52
- FREQUENCY BAND DETERMINER — 53
- FREQUENCY BAND CONTROLLER — 54
- BAND USE STATUS COLLECTOR — 55

BASE STATION — 11
BASE STATION — 21
BASE STATION — 31

EP 1 494 491 A1

*Fig.11*

Fig.12

Fig.13

ASSIGNED CELLS

FIXED P1  FIXED P2  FIXED P3  FIXED P4  FIXED P5
DYNAMIC P6  DYNAMIC P7  DYNAMIC P8  DYNAMIC P9

G12 — $Z_8$, $Z_{11}$, $Z_{14}$, $Z_{17}$

G11 — $Z_1$

A BAND

G21 — $Z_3$, $Z_{15}$

G22 — $Z_7$, $Z_{13}$

B BAND

G31 — $Z_2$, $Z_{12}$, $Z_{16}$

G32 — $Z_5$, $Z_{10}$, $Z_{18}$

C BAND

G41 — $Z_4$, $Z_{19}$

G42 — $Z_6$, $Z_9$

$d_1$

D BAND $d_2$

$a_1$   $a_2$   $b_1$   $b_2$   $c_1$   $c_2$   FREQUENCY f

EP 1 494 491 A1

# Fig.14

IN THE CASE OF f=a₁ | IN THE CASE OF f=b₁ | IN THE CASE OF f=c₁ | IN THE CASE OF f=d₁

IN THE CASE OF f=a₂ | IN THE CASE OF f=b₂ | IN THE CASE OF f=c₂ | IN THE CASE OF f=d₂

EP 1 494 491 A1

Fig.15

Fig.16

P11 P12    P13    P14 P15    P16 P17 P18    P19

A₁

A₂

B₁

B₂

C₁

C₂

D₁

D₂

FREQUENCY f

EP 1 494 491 A1

29

**Fig.17**

Fig.18

**European Patent Office**

## EUROPEAN SEARCH REPORT

Application Number

EP 04 01 5624

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 974 324 A (HENSON STEVEN RAY) 26 October 1999 (1999-10-26) * abstract * * column 1, line 10 - column 2, line 45 * * column 3, line 62 - column 7, line 20; claim 1 * | 1-6,11 | H04Q7/36 |
| X | US 6 085 093 A (FARUQUE SALEH ET AL) 4 July 2000 (2000-07-04) * abstract * * column 1, line 25 - column 2, line 25 * * column 3, line 48 - column 4, line 25 * * claim 1; figures 5,6a,6b * | 1-6,11 | |
| A | I. KATZELA, M. NAGHSHINEH: "Channel Assignment Schemes for Cellular Mobile Telecommunication Systems: A Comprehensive Survey" IEEE PERSONAL OMMUNICATIONS, vol. 3, June 1996 (1996-06), pages 10-31, XP002295805 * the whole document * | 1-12 | |

TECHNICAL FIELDS SEARCHED (Int.Cl.7)

H04Q

The present search report has been drawn up for all claims

| Place of search | Date of completion of the search | Examiner |
|---|---|---|
| Munich | 10 September 2004 | Isopescu, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 04 01 5624

This annex lists the patent family members relating to the patent documents cited in the above-mentioned European search report.
The members are as contained in the European Patent Office EDP file on
The European Patent Office is in no way liable for these particulars which are merely given for the purpose of information.

10-09-2004

| Patent document cited in search report | | Publication date | Patent family member(s) | | Publication date |
|---|---|---|---|---|---|
| US 5974324 | A | 26-10-1999 | AU | 750721 B2 | 25-07-2002 |
| | | | AU | 6154798 A | 26-08-1998 |
| | | | BR | 9807215 A | 23-05-2000 |
| | | | CA | 2279883 A1 | 13-08-1998 |
| | | | CN | 1135030 B | 14-01-2004 |
| | | | DE | 19882098 T0 | 16-12-1999 |
| | | | GB | 2366962 A ,B | 20-03-2002 |
| | | | GB | 2341515 A ,B | 15-03-2000 |
| | | | WO | 9835519 A2 | 13-08-1998 |
| US 6085093 | A | 04-07-2000 | NONE | | |